# EUROPEAN PATENT SPECIFICATION

(11) **EP 2 225 635 B1**
(45) Date of publication and mention of the grant of the patent: **03.06.2015**
(21) Application number: 08863031.4
(22) Date of filing: 16.12.2008
(51) Int. Cl.: G06F 9/445, H04L 29/08

(54) **USER EQUIPMENT, STORAGE MEDIUM, SERVICE CENTER AND METHOD**
BENUTZERGERÄT, SPEICHERMEDIUM, DIENSTZENTRUM UND VERFAHREN
ÉQUIPEMENT UTILISATEUR, SUPPORT DE STOCKAGE, CENTRE DE SERVICE ET PROCÉDÉ

(30) Priority: 19.12.2007 FI 20075935
(43) Date of publication of application: 08.09.2010
(73) Proprietor: TeliaSonera AB, 10663 Stockholm (SE)
(72) Inventor: JÄRVENPÄÄ, Marko, FI-05460 Hyvinkää (FI); TUOMELA, Frans, FI-00640 Helsinki (FI)
(74) Representative: Kolster Oy Ab
(86) International application number: PCT/FI2008/050744
(87) International publication number: WO 2009/077657

(56) References cited:
- US-A- 5 845 077
- US-A1- 2002 120 723
- US-A1- 2004 128 370
- US-A1- 2007 240 134
- US-B1- 6 871 345
- GOUVERIS S. ET AL: 'Programmable middleware for the dynamic deployment of services and protocols in ad hoc network' 9TH IFIP/IEEE INTERNATIONAL SYMPOSIUM ON INTEGRATED NETWORK MANAGEMENT, 2005. IM 2005, [Online] 15 May 2005 - 19 May 2005, NICE, FRANCE, pages 3 - 16, XP003025125 Retrieved from the Internet: <URL:http://dx.doi.org/10.1109/INM.2005.144 0765> [retrieved on 2009-03-05]

## Description

### BACKGROUND OF THE INVENTION

### 1. Field of the Invention

This invention relates to a solution for providing information to others about the capabilities of user equipment.

### 2. Description of Prior Art

Previously there is known from US 2004/0128370 A1 a system and a method for synchronizing the configuration of distributed network management applications, and from US 2002/0120723 A1 a system for modifying the functionality of intelligent electronic devices installed and operating in the field.

Continuous development of user equipment and communication systems has led to a situation where it is difficult for users to determine the capabilities of the user equipments of other users. Many user equipments are suitable for communication via alternative systems and the users also have a possibility to change the capabilities of their user equipments simply by installing new software.

A user who is interested in communication with another user or alternatively, for instance, in providing the other user with data or information for a specific purpose might experience the problem of selecting a suitable form of communication or a suitable data form. The reason for this problem is that the properties of the other users' user equipment are not known.

### SUMMARY OF THE INVENTION

An object of the present invention is to solve the above mentioned problem by providing a new and efficient solution to the distribution of information about user equipments to other users. This object is achieved with the user equipment of claim 1, the program of claim 5, the computer readable storage medium of claim 6 and the method of claim 7.

Transmission of information identifying installed plugins in such a way that other users needing this information can gain access to it makes it possible for said other users to keep track of the properties of a user equipment of a specific user. In this way, a user with the intention to communicate with another user or to transmit data or information to this other user can in advance ensure that a suitable way of communicating or a suitable data format is selected. It is also possible that the user at this stage realizes that the other party has installed a plugin in his or her user equipment that the user does not have available. This makes it possible for the user to consider installation of the same or a compatible plugin in order to make it possible to utilize the properties provided by this or the compatible plugin with the other user.

Preferred embodiments of the invention are disclosed in the dependent claims.

### BRIEF DESCRIPTION OF DRAWINGS

In the following the present invention will be described in closer detail by way of example and with reference to the attached drawings, in which
Figure 1 is a block diagram illustrating a first embodiment,
Figure 2 is a signaling diagram illustrating the authorization procedure for a new subscriber,
Figure 3 is a flow chart illustrating transmission of information regarding a new plugin,
Figure 4 is a flow chart illustrating reception of information regarding a new plugin, and
Figure 5 is a flow chart illustrating maintenance of information for a user equipment.

### DESCRIPTION OF AT LEAST ONE EMBODIMENT

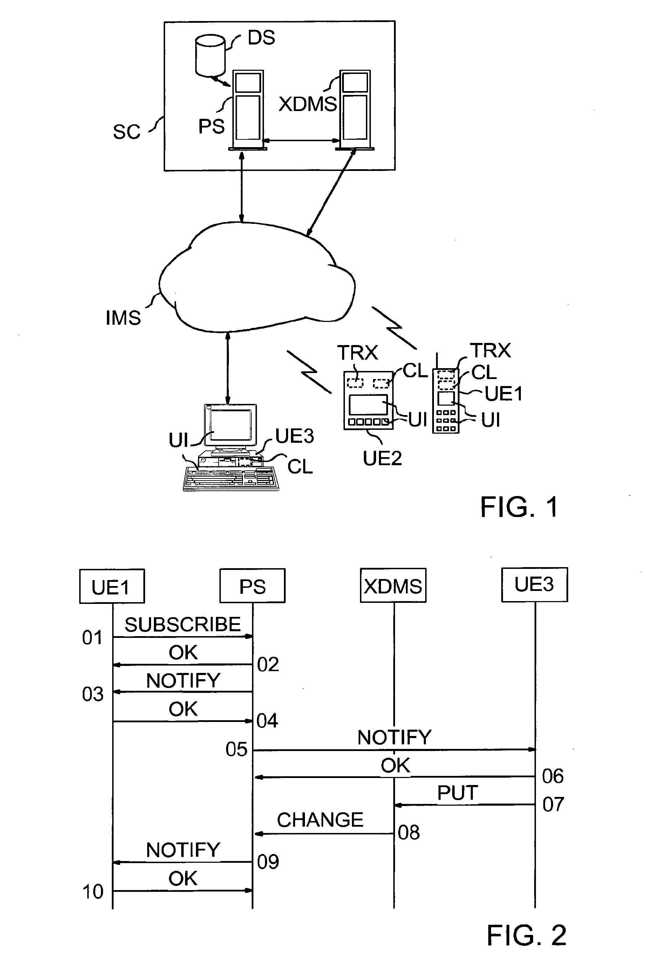

Figure 1 is a block diagram illustrating a first embodiment. Figure 1 illustrates a user equipment UE1 consisting of a mobile station of a cellular radio system, a user equipment UE2 consisting of a Portable Data Assistant (PDA) and a user equipment UE3 consisting of a Personal Computer (PC).

The user equipments UE1 - UE3 can be used for communication, in other words transmission and reception of signals to and from a communication system, which in the example of Figure 1 is an IMS network (IP Multimedia Subsystem). The mobile station UE1 comprises for this purpose a radio transceiver TRX providing wireless access via a cellular radio system or WLAN (Wireless Local Area Network), for instance. The computers, in other words the Personal Computer UE3 and Portable Data Assistant UE2 have access to the communication system via a wired or wireless interface.

Figure 1 also illustrates a service center SC including a Presence Server PS and a XDMS server (XML Document Management Server). In practice the functions of these two servers can be implemented by one or more computers running a program. However, in the following explanation it will by way of example be assumed that the functions are implemented by two different servers PS and XDMS.

The communication between the user equipments UE1 - UE3 and the service center SC may be SIP (Session Initiation Protocol), for instance. The servers PS and XDMS may communicate by XCAP (XML Configuration Access Protocol), for instance.

The user equipments UE1 - UE3 all comprise a client CL, which may be implemented as a program run by a processor of the user equipment. One possibility is that the client CL consists of a contact book application providing access to contact information for persons known by the user of the user equipment. The clients CL monitor the plugins installed in the respective user equipments. A plugin refers to software installed in a user equipment in order to provide specific properties to this user equipment. Examples of plugins are:
- a SKYPE plug in for providing ability for VoIP phone calls,
- a video service plugin for providing ability for video phone calls,
- a mobile TV plugin for providing ability to watch video clips in a specific data format,
- a chat plugin for providing ability to chat with other subscribers, and
- a facebook plugin for providing access to a facebook service.

It should be observed that the present invention is not restricted to the above mentioned plugins, but instead any plugin (without any limitations to a specific predetermined set of plugins) can be utilized in the solution. For instance, users capable of programming may create own plugins and make them available to each other in order to be utilized according to the present invention.

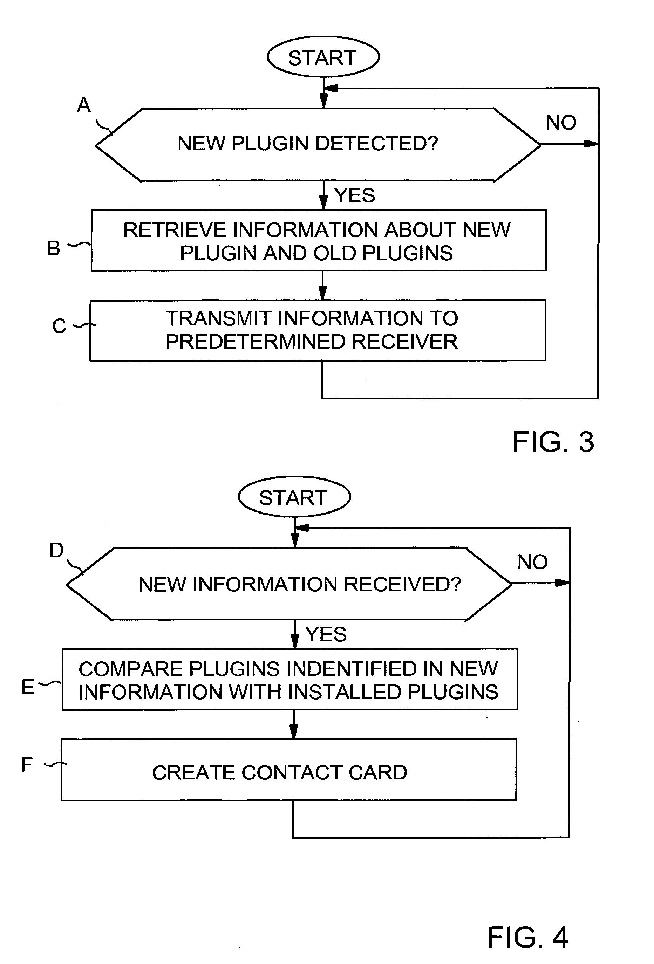

When the user of a user equipment, such as user equipment UE1, installs a new plugin in the user equipment UE1, the client CL detects the presence of a new plugin. In such a situation the client retrieves information about all plugins installed in the user equipment UE1 and creates a presence document containing information about installed plugins, as explained in connection with Figure 3. The presence document may include for each plugin:
- Name of the service,
- Identification (string) for uniquely identifying the service,
- Communication address that is used to contact user equipment UE1 through the service, the address can be the telephone number, TEL-URI (like tel: +1-555-123-4567) or SIP-URI (sip: john.doe@example.com), HTTP URL (like: www.johndoe.com) or any other address, for instance.
- An address as an HTTP URL (like: www.plugininfo.com) from where information is available regarding the service and plugin.

The client CL triggers the transmission of the presence document to a predetermined receiver. In the example of Figure 1 the predetermined receiver is the service center SC and more specifically the presence server PS of the service center. The presence server PS has access to a data storage DS for storing information identifying plugins received from user equipments UE1 - UE3. Thus the presence server stores in this data storage DS the presence document received from the user equipment UE1. The data storage may consist of a hard disk or any other suitable medium for storing data.

The clients CL of the user equipments also have the capability of providing the users with information about plugins installed in other user equipments. For instance, the client CL may control the user equipment UE1 to display on the user interface UI information about plugins installed in a specific contact included in the list of contacts maintained in the user equipment UE1. By example, the user may via the display obtain the information that the contact consisting of user equipment UE2 has available a plugin for SKYPE and a plugin for chat, but no video service plugin is displayed for this contact as such a plugin is not installed in the user equipment UE2. The user is therefore capable of selecting a suitable form of communication when establishing communication with user equipment UE1 to user equipment UE2.

If the user of user equipment UE1 wants to obtain information about plugins available to a new contact consisting of user equipment UE3, the user transmits a request for such information to the service center SC. Provided that the user is granted access to the requested information, as explained in connection with Figure 2, the presence server PS provides the user equipment UE1 with the presence document stored in the data storage DS for user equipment UE3. The user equipment UE1 is then capable of providing the user with information about installed plugins for the contact consisting of user equipment UE3 as explained in connection with Figure 4.

Figure 2 is a signaling diagram illustrating the authorization procedure for a new subscriber. In Figure 2 it is assumed, by way of example, that the user of user equipment UE1 wants to obtain information about plugins available to a new contact consisting of user equipment UE3.

In steps 01 - 04 the client CL controls user equipment UE1 to transmit a request for a subscription of information regarding plugins installed in user equipment UE3. The request is transmitted to the presence server PS, which acknowledges the receipt of the request and transmits an initially empty presence document to the user equipment UE1.

In steps 05 - 06 the user of the user equipment UE3 is notified that the subscriber of user equipment UE1 has requested information about plugins available to user equipment UE3, and user equipment UE3 verifies the reception of the notification. In this connection the subscriber of user equipment UE1 is identified in such a reliable way that the user of user equipment UE3 can be sure of who is requesting this information. For this purpose an identifier such as a name, telephone number or email address verified by the presence server PS may be included in the notification, for instance.

In steps 07 - 08 the user of user equipment UE3 decides that the subscriber is authorized to receive the requested information and verifies this by triggering the transmission of a message indicating this to the XDMS server. The XDMS server maintains a list of subscribers authorized to receive the presence document of user equipment UE3. Consequently the subscriber of user equipment UE1 is added to this list and the presence server PS is notified by the XDMS server that the list has been updated.

In steps 09 - 10 the presence server PS detects that the requesting user equipment UE1 is authorized and transmits the presence document of user equipment UE3 to user equipment UE1. User equipment UE1 acknowledges receipt of the presence document.

Figure 3 is a flow chart illustrating transmission of information regarding a new plugin and which can be implemented by the clients CL of the user equipments UE1 - UE3 shown in Figure 1.

In block A the client monitors the plugins installed in the user equipment in order to detect a new installed plugin and also to detect a situation where an old plugin has been deleted. The plugins to be monitored are not restricted to any specific set of plugins, but instead all plugins capable of communicating with a contact book application in the user equipment, for instance, can be monitored. Once such a new plugin or a deletion of an old plugin is detected, block B is entered.

In block B the client retrieves information about all plugins installed in the user equipment, including a possible new installed plugin. The retrieved information is used to create an updated presence document containing information identifying plugins installed in the user equipment. The presence document may include the information mentioned in connection with Figure 1, for instance.

In block C the client controls the user equipment to transmit the presence document to a predetermined receiver. In this example it is assumed that the presence document is transmitted to the service center SC and specifically to the presence server PS of the service center, where it is stored in an information storage.

Figure 4 is a flow chart illustrating reception of information regarding a new plugin and which can be implemented by the clients CL of the user equipments UE1 - UE3 shown in Figure 1.

In block D the client of user equipment UE1 detects that new information, in this case a new presence document containing information about plugins installed in another user equipment UE3, is received.

The reception of a new presence document may be triggered by a previously transmitted request from the user equipment UE1 in question in order to obtain the presence document of another user equipment UE3. The transmission of such a request may be automatically triggered as the user of user equipment UE1 selects a specific contact from a contact book by using the user interface UI of user equipment UE1.

Alternatively the presence server PS receiving the presence document may be configured to automatically transmit a new presence document to all authorized user equipments as soon as a new presence document has been received by the presence server PS.

In block E the plugins identified in the new information, in other words the presence document of the other user equipment UE3, are compared by the client CL with plugins installed in the user equipment UE1 employed. Based on this comparison a contact card is created in block F. If the presence document indicates:
- that a specific plugin is installed in user equipment UE3 and the same or a compatible plugin is installed also in user equipment UE1, the service corresponding to this plugin is included in the contact card maintained in user equipment UE1 regarding user equipment UE3.
- that a specific plugin is installed in user equipment UE3 but this or a compatible plugin is not installed in user equipment UE1, this plugin is not included in the contact card. However, in this case the client of user equipment UE1 may be configured to automatically launch a browser to retrieve data from a specific address included in the information regarding this plugin, in order to display on the user interface UI of user equipment UE1 additional data about this plugin. In this way the user of user equipment UE1 may automatically obtain additional information about the plugin in order to consider the possibility of obtaining this specific plugin, or alternatively a compatible plugin. In case two user equipments are running different operating systems, for instance, it is possible that the same plugin does not function in both user equipments, but instead a compatible plugin for the operating system in question should be selected.
- that a specific plugin is installed in user equipment UE1 but this or a compatible plugin is according to the presence document not installed in user equipment UE3, this specific plugin is not included in the contact card.

In the above described way the contact card regarding user equipment UE3 and which can be viewed on the display of user equipment UE1, will indicate those alternatives which the user of user equipment UE1 has available when considering to communicate with or transmit information or data to user equipment UE3, for instance.

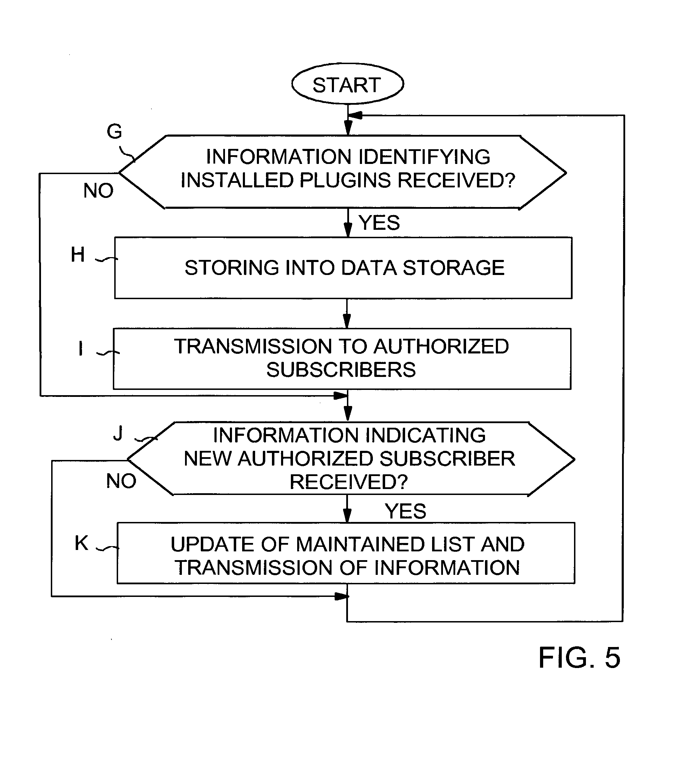

Figure 5 is a flow chart illustrating maintenance of information for a user equipment and which can be implemented by the service center SC shown in Figure 1.

In block G the service center SC monitors if information identifying installed plugins to user equipment UE3, in other words a new presence document, is received. If so, this document is stored H in a data storage available for the service center. In addition the presence document is transmitted I to the user equipments of all authorized subscribers, in other words to all those subscribers who are authorized to receive presence documents regarding user equipment UE3. A list of such authorized subscribers is maintained by the service center SC.

In block J the service center J checks if new information indicating authorized subscribers has been received regarding a user equipment. If such information has been received regarding user equipment UE3, for instance, the list of authorized subscribers maintained for user equipment UE3 is updated in block K. Updating may involve adding or deleting one or more subscribers to/from this list.

Figure 5 and the previous explanation suggest that a presence document is transmitted to all authorized subscribers automatically as soon as such a new presence document has been received. It is, however, also possible that the service center transmits a presence document stored in a data storage to a user equipment of an authorized subscriber in response to a request from such a user equipment even though no change has recently occurred in the presence document in question.

It is to be understood that the above description and the accompanying Figures are only intended to illustrate the present invention. It will be obvious to those skilled in the art that the invention can be varied and modified also in other ways without departing from the scope of the invention.

## Claims

1. A user equipment (UE1 - UE3) comprising:
a user interface (UI),
a communication part (TRX) for communication via a communication system (IMS), and
a client (CL) for maintaining information about contacts and providing the user of the user equipment with a contact book application providing access to contact information for persons known by the user, wherein said client (CL) is arranged to
trigger transmission of information identifying a plugin to a predetermined receiver (SC) in response to detection that said plugin is installed in the user equipment,
receive via the communication system (IMS) information identifying plugins installed in user equipments of contacts whose contact information is maintained in the contact book application of the user equipment (UE1 - UE3),
compare plugins installed in the user equipment with the received information identifying plugins installed in user equipments of contacts, and
display on said user interface (UI) information identifying plugins installed in a user equipment (UE1 - UE3) of a contact in response to a selection of said contact performed via said user interface (UI), said displayed information indicating those alternatives available for communicating with or transmitting information or data to the selected contact.

2. The user equipment of claim 1, **characterized in that** said client (CL) is
responsive to an authorization request received from said communication system (IMS) for displaying on said user interface (UI) a request for allowing a subscriber with an identifier included in said request to access information identifying plugins installed in said user equipment (UE1 - UE3), and
arranged to trigger transmission of a response to said predetermined receiver (SC) indicating that the request has been approved in response to a selection performed via said user interface (UI).

3. The user equipment of claim 1 or 2, **characterized in that** said user equipment is a mobile station (UE1) of a mobile communication system and said communication part (TRX) is a radio transceiver.

4. The user equipment of claim 1 or 2, **characterized in that** said user equipment is a computer (UE2, UE3) and said communication part is an apparatus for wired or wireless communication via said communication system.

5. A program for controlling a user equipment, wherein said program is configured to control said user equipment (UE1 UE3) to:
trigger transmission of information identifying a plugin via a communication system (IMS) to a predetermined receiver (SC) in response to detection that said plugins is installed in the user equipment (UE1 - UE3),
receive via said communication system (IMS) information identifying plugins installed in user equipments of contacts whose information is maintained by a contact book application providing access to contact information for persons known by the user of the user equipment (UE1 - UE3),
compare plugins installed in the user equipment with the received information identifying plugins installed in user equipments of contacts, and
display on a user interface (UI) information identifying plugins installed in a user equipment (UE1 - UE3) of a contact in response to a selection of said contact performed via said user interface (UI), said displayed information indicating those alternatives available for communicating with or transmitting information or data to the selected contact.

6. A computer readable storage medium, wherein said storage medium contains a program according to claim 5.

7. A method of maintaining information for a user equipment (UE1 - UE3), wherein said method comprises:
receiving (G) information identifying plugins installed in a user equipment from said user equipment,
storing (H) said received information in a data storage,
maintaining (J, K) a list of subscribers authorized to have access to said information stored in the data storage based on information received from said user equipment, and
providing (I) subscribers included in said maintained list with access to said information stored in the data storage for providing a contact book application of the subscriber equipment of the subscribers, which contact book application provides access to contact information of persons known by the subscriber, with information indicating those alternatives available for communicating with or transmitting information or data to said user equipment.

## Patentansprüche

1. Ein Benutzergerät (UE1 - UE3) aufweisend:
eine Benutzerschnittstelle (UI),
einen Kommunikationsteil (TRX) zum Kommunizieren über ein Kommunikationssystem (IMS), und
einen Client (CL) zum Unterhalten von Information über Kontakte und zum Bereitstellen einer Kontaktblockanwendung an den Benutzer von dem Benutzerendgerät, die Zugriff auf Kontaktinformation für dem Benutzer bekannte Personen bereitstellt, wobei der besagte Client (CL) angeordnet ist, um
die Übertragung von Information einzuleiten, welche die Identität eines Plugin an einen vorherbestimmten Empfänger (SC) bekanntgibt als Reaktion auf eine Detektierung, dass das besagte Plugin auf dem Benutzergerät installiert ist,
Information über das Kommunikationssystem (IMS) zu empfangen, welche die Identität von Plugins bekanntgibt, welche auf Benutzergeräten von Kontakten installiert sind, dessen Kontaktinformation in der Kontaktblockanwendung von dem Benutzergerät (UE1 - UE3) unterhalten wird,
Plugins, welche auf dem Benutzergerät installiert sind, mit der empfangenen Information, welche die Identität von Plugins bekanntgibt, welche auf den Benutzergeräten von Kontakten installiert sind, zu vergleichen, und
Information auf der besagten Benutzerschnittstelle (UI) anzuzeigen, welche die Identität von Plugins bekanntgibt, welche auf einem Benutzergerät (UE1 - UE3) von einem Kontakt installiert sind, als Reaktion auf eine Auswahl von dem besagten Kontakt durchgeführt über die besagte Benutzerschnittstelle (UI), die besagte angezeigte Information gibt diejenigen Alternativen an, welche zum Kommunizieren mit dem ausgewählten Kontakt oder zum Übertragen von Information oder Daten an diesen ausgewählten Kontakt zur Verfügung stehen.

2. Das Benutzergerät von Anspruch 1, **dadurch gekennzeichnet, dass** der besagte Client (CL)
reagiert auf eine Autorisierungsanfrage empfangen von dem besagten Kommunikationssystem (IMS) zum Anzeigen auf der besagten Benutzerschnittstelle (UI) einer Anfrage, um es einem Teilnehmer mit einem in der besagten Anfrage beinhalteten Identifikator zu ermöglichen, Zugriff auf Information zu erhalten, welche die Identität von Plugins bekanntgibt, welche auf dem besagten Benutzergerät (UE1 - UE3) installiert sind, und
angeordnet ist, um die Übertragung von einer Antwort an den besagten vorherbestimmten Empfänger (SC) einzuleiten, welche angibt, dass die Anfrage genehmigt wurde als Reaktion auf eine Auswahl, die über die besagte Benutzerschnittstelle (UI) durchgeführt wurde.

3. Das Benutzergerät von Anspruch 1 oder 2, **dadurch gekennzeichnet, dass** das besagte Benutzergerät eine mobile Station (UE1) von einem mobilen Kommunikationssystem ist und der Kommunikationsteil (TRX) ein Funk-Sendeempfänger ist.

4. Das Benutzergerät von Anspruch 1 oder 2, **dadurch gekennzeichnet, dass** das besagte Benutzergerät ein Computer (UE2, UE3) ist und der besagte Kommunikationsteil eine Vorrichtung zur kabelgebundenen oder kabellosen Kommunikation über das besagte Kommunikationssystem ist.

5. Ein Programm zum Steuern eines Benutzergeräts, wobei das besagte Programm konfiguriert ist, um das besagte Benutzergerät (UE1 - UE3) zu steuern, um
die Übertragung von Information einzuleiten, welche die Identität eines Plugin über ein Kommunikationssystem (IMS) an einen vorherbestimmten Empfänger (SC) bekanntgibt als Reaktion auf eine Detektierung, dass das besagte Plugin auf dem Benutzergerät (UE1 - UE3) installiert ist,
Information über das besagte Kommunikationssystem (IMS) zu empfangen, welche die Identität von Plugins bekanntgibt, welche auf Benutzergeräten von Kontakten installiert sind, dessen Information von einer Kontaktblockanwendung unterhalten wird, welche Zugriff auf Kontaktinformation für dem Benutzer des Benutzergeräts (UE1 - UE3) bekannte Personen bereitstellt,
Plugins, welche auf dem Benutzergerät installiert sind, mit der empfangenen Information, welche die Identität von Plugins bekanntgibt, welche auf den Benutzergeräten von Kontakten installiert sind, zu vergleichen, und
Information auf einer Benutzerschnittstelle (UI) anzuzeigen, welche die Identität von Plugins bekanntgibt, welche auf einem Benutzergerät (UE1 - UE3) von einem Kontakt installiert sind, als Reaktion auf eine Auswahl von dem besagten Kontakt durchgeführt über die besagte Benutzerschnittstelle (UI), die besagte angezeigte Information gibt diejenigen Alternativen an, welche zum Kommunizieren mit dem ausgewählten Kontakt oder zum Übertragen von Information oder Daten an diesen ausgewählten Kontakt zur Verfügung stehen.

6. Ein computerlesbares Speichermedium, wobei das besagte Speichermedium ein Programm gemäß Anspruch 5 beinhaltet.

7. Ein Verfahren zum Unterhalten von Information für ein Benutzergerät (UE1 - UE3), wobei das besagte Verfahren aufweist:
Empfangen (G) von Information von einem Benutzergerät, welche die Identität von Plugins bekanntgibt, welche auf dem besagten Benutzergerät installiert sind,
Speichern (H) der besagten empfangenen Information in einem Datenspeicher,
Unterhalten (J, K) einer Liste von Teilnehmern, die autorisiert sind, um Zugriff auf die besagte Information, welche in dem Datenspeicher gespeichert ist, zu haben, basierend auf Information empfangen von dem besagten Benutzergerät, und
Bereitstellen (I) von Zugriff auf die besagte Information, welche in dem Datenspeicher gespeichert ist, an Teilnehmer, die in der besagten unterhaltenen Liste beinhaltet sind, zum Bereitstellen einer Kontaktblockanwendung des Teilnehmergeräts der Teilnehmer, wobei die Kontaktblockanwendung Zugriff auf Kontaktinformation für dem Teilnehmer bekannte Personen bereitstellt, mit Information, welche diejenigen Alternativen angibt, welche zum Kommunizieren mit dem besagten Benutzergerät oder zum Übertragen von Information oder Daten an dieses besagte Benutzergerät zur Verfügung stehen.

## Revendications

1. Equipement utilisateur (UE1-UE3) comprenant :
une interface utilisateur (UI),
une partie de communication (TRX) pour communiquer via un système de communication (IMS), et
un client (CL) pour entretenir des informations sur des contacts et fournir à l'utilisateur de l'équipement utilisateur une application d'enregistrement de contacts offrant un accès à des informations de contacts pour des personnes connues de l'utilisateur, dans lequel ledit client (CL) est aménagé pour :
déclencher la transmission d'informations identifiant une extension à un récepteur prédéterminé (SC) en réponse à la détection que ladite extension est installée dans l'équipement utilisateur,
recevoir via le système de communication (IMS) des informations identifiant des extensions installées dans des équipements utilisateurs de contacts dont les informations de contacts sont entretenues dans l'application d'enregistrement de contacts de l'équipement utilisateur (UE1-UE3),
comparer les extensions installées dans l'équipement utilisateur aux extensions d'identification d'informations reçues installées dans les équipements utilisateurs de contacts, et
afficher sur ladite interface utilisateur (UI) des informations identifiant des extensions installées dans un équipement utilisateur (UE1-UE3) d'un contact en réponse à une sélection dudit contact effectuée via ladite interface utilisateur (UI), lesdites informations affichées indiquant les solutions disponibles pour communiquer avec le contact choisi ou transmettre des informations ou des données à celui-ci.

2. Equipement utilisateur selon la revendication 1, **caractérisé en ce que** ledit client (CL) est :
sensible à une demande d'autorisation reçue dudit système de communication (IMS) pour afficher sur ladite interface utilisateur (UI) une demande permettant à un abonné ayant un identifiant inclus dans ladite demande d'accéder à des informations identifiant des extensions installées dans ledit équipement utilisateur (UE1-UE3) et
aménagé pour déclencher la transmission d'une réponse audit récepteur prédéterminé (SC) indiquant que la demande a été approuvée en réponse à une sélection effectuée via ladite interface utilisateur (UI).

3. Equipement utilisateur selon la revendication 1 ou la revendication 2, **caractérisé en ce que** ledit équipement utilisateur est une station mobile (UE1) d'un système de communication mobile et ladite partie de communication (TRX) est un émetteur-récepteur radio.

4. Equipement utilisateur selon la revendication 1 ou la revendication 2, **caractérisé en ce que** ledit équipement utilisateur est un ordinateur (UE2, UE3) et ladite partie de communication est un appareil de communication filaire ou sans fil via ledit système de communication.

5. Programme de commande d'un équipement utilisateur, dans lequel ledit programme est configuré pour commander ledit équipement utilisateur (UE1-UE3) afin de :
déclencher la transmission d'informations identifiant une extension via un système de communication (IMS) à un récepteur prédéterminé (SC) en réponse à la détection que ladite extension est installée dans l'équipement utilisateur (UE1-UE3),
recevoir via ledit système de communication (IMS) des informations identifiant des extensions installées dans les équipements utilisateurs de contacts dont les informations sont maintenues par une application d'enregistrement de contacts offrant un accès à des informations de contacts pour des personnes connues de l'utilisateur de l'équipement utilisateur (UE1-UE3),
comparer des extensions installées dans l'équipement utilisateur à des extensions d'identification d'informations reçues installées dans des équipements utilisateurs de contacts, et
afficher sur une interface utilisateur (UI) des informations identifiant des extensions installées dans un équipement utilisateur (UE1-UE3) d'un contact en réponse à une sélection dudit contact effectuée via ladite interface utilisateur (UI), lesdites informations affichées indiquant les solutions disponibles pour communiquer avec le contact choisi ou transmettre des informations ou des données à celui-ci.

6. Support de stockage lisible par ordinateur, dans lequel ledit support de stockage contient un programme selon la revendication 5.

7. Procédé d'entretien d'informations pour un équipement utilisateur (UE1-UE3), dans lequel ledit procédé comprend les étapes consistant à :
recevoir (G) des informations identifiant des extensions installées dans un équipement utilisateur dudit équipement utilisateur,
stocker (H) lesdites informations reçues dans une mémoire de données,
entretenir (J, K) une liste d'abonnés autorisés à avoir accès auxdites informations stockées dans la mémoire de données sur la base d'informations reçues dudit équipement utilisateur et
fournir (I) à des abonnés inclus dans ladite liste entretenue un accès auxdites informations stockées dans la mémoire de données pour fournir une application d'enregistrement de contacts de l'équipement des abonnés, laquelle application d'enregistrement de contacts offre un accès à des informations de contacts de personnes connues de l'abonné, avec des informations indiquant les solutions disponibles pour communiquer avec ledit équipement utilisateur ou transmettre des informations ou des données à celui-ci.
